# EUROPÄISCHE PATENTSCHRIFT

(11) **EP 1 032 506 B1**
(45) Veröffentlichungstag und Bekanntmachung des Hinweises auf die Patenterteilung: **05.03.2003**
(21) Anmeldenummer: 98966898.3
(22) Anmeldetag: 14.12.1998
(51) Int. Cl.: B60K 15/04, B65D 55/02

(54) **VORRICHTUNG ZUM ÜBERWACHEN DER SCHLIESSSTELLUNG EINES TANKDECKELS**
DEVICE FOR MONITORING THE CLOSED POSITION OF A FUEL TANK CAP
DISPOSITIF POUR CONTROLER LA POSITION DE FERMETURE D'UN BOUCHON DE RESERVOIR

(30) Priorität: 01.07.1998 DE 29811706 U
(43) Veröffentlichungstag der Anmeldung: 06.09.2000
(73) Patentinhaber: Adwest Köhler GmbH, 59558 Lippstadt (DE)
(72) Erfinder: BRÜGGENOLTE, Josef, D-59597 Bad Westernkotten (DE)
(74) Vertreter: Wiebusch, Manfred
(86) Internationale Anmeldenummer: EP9808191
(87) Internationale Veröffentlichungsnummer: WO00001549

(56) Entgegenhaltungen:
- DE-A- 4 404 014
- DE-A- 19 610 471
- GB-A- 2 168 961

## Beschreibung

Die Erfindung betrifft eine Vorrichtung zum Überwachen der Schließstellung eines Tankdeckels, mit einen am oder im Tankdeckel angeordneten Magneten und einem am Tankstutzen angeordneten Magnetschalter.

Eine Vorrichtung dieser Art wird in DE 44 04 014 A1, der als nächstkommender Stand der Technik angesehen wird, beschrieben und dient dazu, die Schließstellung des Tankdeckels eines Kraftfahrzeugs zu überwachen, so daß bei fehlendem oder nicht vollständig geschlossenem Tankdeckel ein Warnsignal auf dem Armaturenbrett des Fahrzeugs angezeigt werden kann.

Bei der bekannten Vorrichtung weist der Tankdeckel einen Bajonettverschluß auf, und der Magnet ist so angeordnet, daß er sich in der Nähe eines Reedschalters befindet, wenn der Bajonettverschluß verriegelt ist. Je nach Ausführungsform wird somit der Reedschalter entweder geöffnet oder geschlossen, wenn der Tankdeckel die Verriegelungsstellung erreicht. Vorzugsweise ist der Reedschalter so ausgebildet, daß er in der Verriegelungsposition geschlossen ist, und eine zugehörige Auswerteschaltung bewirkt die Anzeige eines Warnsignals, wenn der Stromkreis des Reedschalters unterbrochen ist.

Da sich das Magnetfeld des Magneten nicht auf einen eng begrenzten Raumlokalisieren läßt, kann nach diesem Prinzip die Position des Tankdeckels nur relativ ungenau erfaßt werden. Bei vielen Tankverschlüssen ist der Tankdeckel als Schraubstopfen ausgebildet. Doch auch bei bajonettartigen Tankverschlüssen sind in der Regel Gewindesteigungsflächen vorgesehen, die dafür sorgen, daß der Stopfen in der Schließstellung fest gegen eine zugehörige Dichtung gedrückt wird. Es besteht deshalb die Möglichkeit, daß der Tankdeckel nicht vollständig bis in die Endlage gedreht wird, in der die Tanköffnung zuverlässig abgedichtet ist und in der aufgrund des Reibschlusses auch ein nachträgliches Lockern des Tankdeckels infolge von Erschütterungen verhindert wird. Aufgrund der erwähnten Ungenauigkeit der Positionserfassung würde der Reedschalter jedoch auch in einem solchen Fall ansprechen, so daß das korrekte Schließen des Tankdeckels nicht zuverlässig angezeigt werden kann.

Aufgabe der Erfindung ist es eine Überwachung der Schließstellung des Tankdeckels mit größerer Zuverlässigkeit zu ermöglichen.

Diese Aufgabe wird erfindungsgemäß dadurch gelöst, daß der Tankdeckel einen Drehmomentbegrenzer aufweist und der Magnet derart mit dem Drehmomentbegrenzer gekoppelt ist, daß er erst bei Erreichen des Grenzdrehmoments in eine den Magnetschalter auslösende Stellung gelangt.

Hierdurch ist sichergestellt, daß der Magnetschalter erst dann anspricht, wenn beim Einschrauben oder Eindrehen des Tankdeckels tatsächlich das Grenzdrehmoment erreicht wird und somit sichergestellt ist, daß der Tankdeckel wirklich vollständig und dicht geschlossen ist.

Vorteilhafte Ausgestaltungen der Erfindung ergeben sich aus den Unteransprüchen.

Ein Tankdeckel mit einem Schraubstopfen und einem Drehmomentbegrenzer wird bereits in DE 196 10 471 C2 beschrieben. Dieser Tankdeckel weist eine drehbar auf dem Schraubstopfen angeordnete, mit einem Griff versehene Kappe auf, und das vom Benutzer auf die Kappe ausgeübte Drehmoment wird durch den Drehmomentbegrenzer auf den Schraubstopfen übertragen. Sobald bei Erreichen der Schließstellung das Grenzdrehmoment überschritten wird, kommt es zu einer Verdrehung der Kappe relativ zu dem Schraubstopfen. Gemäß einer vorteilhaften Ausgestaltung der vorliegenden Erfindung wird diese Relativdrehung dazu benutzt, den Magneten in die Auslöseposition zu überführen. Vorzugsweise ist der Magnet axialbeweglich in dem Tankdeckel gehalten, und an der Kappe oder am Stopfen des Tankdeckels sind Schrägflächen vorgesehen, die die Drehung der Kappe relativ zum Stopfen in eine Axialbewegung des Magneten umsetzen. Der Magnet ist elastisch in die Ruhestellung vorgespannt und wird erst bei Erreichen des Grenzdrehmoments durch die Schrägflächen in die Auslöseposition überführt. Dabei können die Schrägflächen und die zugehörigen Gegenflächen so gestaltet sein, daß sie voneinander abgleiten können, wenn die Kappe nach Erreichen des Grenzdrehmoments weitergedreht wird. In diesem Fall ist es möglich, daß der Magnet nach Überschreitung des Grenzdrehmoments wieder zurückfedert und sich aus der Auslöseposition entfernt. Vorzugsweise ist diese Zurückbewegung des Magneten jedoch so begrenzt, daß der Magnetschalter aufgrund der magnetischen Remanenz der Reedkontakte trotzdem geschlossen bleibt. Erst wenn der Tankdeckel wieder gelockert oder vollständig entfernt wird, wird der Abstand zwischen dem Magneten und dem Magnetschalter so groß, daß der Schalter öffnet. Der Magnetschalter weist also in diesem Fall ein gewisses Hystereseverhalten auf. Er schließt erst, wenn das Grenzdrehmoment mindestens einmal erreicht oder überschritten wird, bleibt dann jedoch geschlossen, wenn sich der Magnet wieder weiter von dem Magnetschalter entfernt.

Als Alternative ist auch eine Ausführungsform denkbar, bei der der Magnet in der Auslöseposition einen relativ geringen Abstand zu einem magnetisierbaren Körper aufweist, so daß er nach Erreichen der Auslöseposition magnetisch in der Auslöseposition gehalten wird und erst beim Herausschrauben des Tankdeckels wieder in die Ruhestellung zurückfedert.

Im folgenden werden Ausführungsbeispiele der Erfindung anhand der Zeichnungen näher erläutert.

Es zeigen:
- Figur 1: einen Schnitt durch einen Tankdeckel bei Erreichen der Schließstellung in einem Tankstutzen; und
- Figur 2: einen Schnitt durch den Tankdeckel in einer Position nach Überschreiten des Grenzdrehmoments eines Drehmomentbegrenzers.

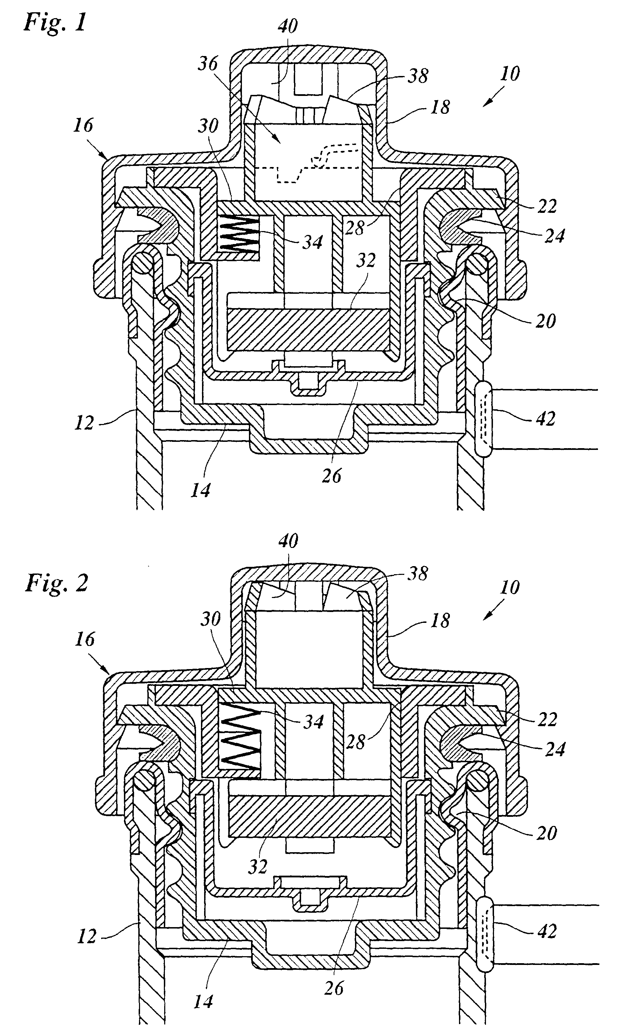

In Figur 1 ist ein Tankdeckel 10 auf einen Tankstutzen 12 eines Kraftstofftanks eines Kraftfahrzeugs aufgeschraubt. Der Tankdeckel weist einen Schraubstopfen 14 und eine drehbar mit dem Schraubstopfen verbundene Kappe 16 auf, die einen Griff 18 bildet. In der Mündung des Tankstutzens 12 ist ein Gewindeeinsatz 20 befestigt, der mit dem Außengewinde des Schraubstopfens 14 in Gewindeeingriff steht. Figur 1 zeigt den Tankdeckel in der Schließstellung, in der ein Flansch 22 des Schraubstopfens über eine Dichtung 24 mit dem Rand des Gewindeeinsatzes 20 in Dichtberührung steht.

Im Inneren des Schraubstopfens 14 sind ein topfförmiges Innenteil 26 und weiter außen, also weiter oben in Figur 1, eine Führungsbuchse 28 angeordnet. In der Führungsbuchse 28 ist ein Magnetträger 30 axialbeweglich geführt. Ein Magnet 32 (Permanentmagnet) ist mit Rastklauen an dem Magnetträger 30 gehalten und liegt innerhalb des topfförmigen Innenteils 26. Die Führungsbuchse 28 bildet zugleich ein Widerlager für Federn 34, die den Magnetträger 30 und den Magneten 32 elastisch in eine Ruhestellung, nach oben in Figur 1, vorspannen.

Ein an sich bekannter Drehmomentbegrenzer 36 ist wirkungsmäßig zwischen der Kappe 16 und dem Schraubstopfen 14 angeordnet. Beim Aufschrauben des Tankdeckels auf den Tankstutzen wird die Drehbewegung der Kappe 16 durch diesen Drehmomentbegrenzer 36 so lange auf den Schraubstopfen 14 übertragen, bis ein vorgegebenes Grenzdrehmoment erreicht wird. Dieses Grenzdrehmoment ist so gewählt, daß der Schraubstopfen 14 dann fest in den Gewindeeinsatz 20 eingeschraubt ist und den Tankstutzen dicht verschließt. Der Drehmomentbegrenzer 36 ist in Figur 1 lediglich in gestrichelten Linien angedeutet und wird durch an der Kappe 16 gehaltene Federn gebildet, die in einen die Führungshülse 28 umgebenden Kranz von Kerben eingreifen (siehe DE 196 10 471 C2). In dem in Figur 1 gezeigten Zustand ist das Grenzdrehmoment gerade überschritten worden, so daß die Feder aus der zugehörigen Kerbe herausgedrängt wurde.

Der Magnetträger 30 weist an seinem oberen, in den Griff 18 hineinragenden Ende einen Kranz in Umfangsrichtung abgeschrägter Nocken 38 auf, die mit in dem Griff 18 ausgebildeten Ausrückern 40 zusammenwirken. Wenn das Grenzdrehmoment des Drehmomentbegrenzers überschritten wurde, dreht sich die Kappe 16 relativ zu dem Schraubstopfen 14 und damit auch relativ zum Magnetträger 30. Die Ausrücker 40 gleiten daher auf die abgeschrägten Nocken 38 auf und drücken den Magnetträger 30 entgegen der Kraft der Federn 34 nach unten in die in Figur 1 gezeigte Auslöseposition. In dieser Position bewirkt der Magnet 32 das Schließen der Reedkontakte eines außen am Tankstutzen 12 angeordneten Magneschalters 42. Auf diese Weise wird ein Signal erzeugt, das das vollständige Schließen des Tankdeckels anzeigt.

Wenn die Kappe 16 weiter gedreht wird, gleiten die Ausrücker 40 von den Nocken 38 ab, und der Magnetträger 30 schnellt unter der Wirkung der Federn 34 wieder nach oben, so daß er die in Figur 2 gezeigte Ruhestellung einnimmt. In dieser Stellung ist der Magnet weiter von dem Magnetschalter 42 entfernt. Wenn der Magnetschalter 42 zuvor geschlossen war, bleibt er jedoch aufgrund der magnetischen Remanenz im geschlossenen Zustand.

Wenn der Tankdeckel 10 aus dem Tankstutzen 12 herausgeschraubt wird, vergrößert sich der Abstand zwischen dem Magneten 32 und dem Magnetschalter 42 weiter, so daß der Magnetschalter öffnet. Da der Drehmomentbegrenzer 36 nur in einer Drehrichtung wirkt, kann beim Herausschrauben ein im Prinzip unbegrenztes Drehmoment auf den Schraubstopfen 14 übertragen werden.

Wenn der Tankdeckel anschließend wieder auf den Tankstutzen aufgeschraubt wird und wieder die in Figur 2 gezeigte Position erreicht, bleibt der Magnetschalter 42 geöffnet, da die Kraft des Magneten 32 allein nicht ausreicht, die Reedkontakte in die Schließstellung zu bringen. Erst wenn das Grenzdrehmoment wieder überschritten und dabei der Magnetträger 30 wieder in die in Figur 1 gezeigte Auslöseposition bewegt wird, wird die magnetische Kraft so groß, daß der Magnetschalter 42 wieder schließt und dann geschlossen bleibt.

In einer modifizierten Ausführungsform ist es auch möglich, daß der Drehmomentbegrenzer unmittelbar durch die Nocken 38 und Ausrücker 40 gebildet wird.

## Patentansprüche

1. Vorrichtung zum Überwachen der Schließstellung eines Tankdeckels, (10) mit einem am oder im Tankdeckel angeordneten Magneten (32) und einem am Tankstutzen (12) angeordneten Magnetschalter (42), **dadurch gekennzeichnet, daß** der Tankdeckel (10) einen Drehmomentbegrenzer (36) aufweist und der Magnet (32) derart mit dem Drehmomentbegrenzer (36) gekoppel ist, daß er erst bei Erreichen eines Grenzdrehmoments in eine den Magnetschalter (42) auslösende Stellung gelangt.

2. Vorrichtung nach Anspruch 1, **dadurch gekennzeichnet, daß** der Tankdeckel (10) einen den Tankstutzen (12) verschließenden Stopfen (14) und eine drehbare Kappe (16) aufweist, die durch den Drehmomentbegrenzer (36) mit dem Stopfen (14) gekoppelt ist und bei Überschreitung des Grenzdrehmoments relativ zu dem Stopfen drehbar ist, und daß der Magnet durch die Drehung der Kappe (16) relativ zu dem Stopfen (14) in die Auslöseposition bewegbar ist.

3. Vorrichtung nach Anspruch 2, **dadurch gekennzeichnet, daß** der Stopfen (14) ein Schraubstopfen ist.

4. Vorrichtung nach Anspruch 2 oder 3, **dadurch gekennzeichnet, daß** der Magnet (32) axialbeweglich in dem Stopfen (14) gehalten ist.

5. Vorrichtung nach Anspruch 4, **dadurch gekennzeichnet, daß** der Magnet (32) elastisch in eine der Auslöseposition entgegengesetzte Ruhestellung vorgespannt und durch an einem Magnetträger (30) sowie an der Kappe (16) ausgebildete Nocken (38) und Ausrücker (40) in die Auslöseposition zurückdrückbar ist.

6. Vorrichtung nach Anspruch 5, **dadurch gekennzeichnet, daß** die Nocken (38) und Ausrücker (40) nach Erreichen oder Überschreiten des Grenzdrehmoments ein Zurückfedern des Magnetträgers (30) in die Ruhestellung gestatten und daß die Lage des Mageneten (32) in der Ruhestellung und seine Stärke so auf die Position des Magnetschalters (42) abgestimmt sind, daß der Magnetschalter (42), nachdem er einmal geschlossen wurde, auch bei in der Ruhestellung befindlichen Magneten im geschlossenen Zustand bleibt.

## Claims

1. Apparatus for monitoring the closed position of a tank cap (10), having a magnet (32) which is arranged on or in the tank cap and a magnetic switch (42) which is arranged on the tank connecting piece (12), **characterised in that** the tank cap (10) has a torque limiter (36) and the magnet (32) is connected to the torque limiter (36) in such a manner that it reaches a position which activates the magnetic switch (42) only when a limit torque is reached.

2. Apparatus according to claim 1, **characterised in that** the tank cap (10) has a plug (14) which closes the tank connecting piece (12) and a rotatable cap (16) which is connected by the torque limiter (36) to the plug (14) and which can rotate relative to the plug if the limit torque is exceeded, and **in that** the magnet can be moved into the activating position by the rotation of the cap (16) relative to the plug (14).

3. Apparatus according to claim 2, **characterised in that** the plug (14) is a screw plug.

4. Apparatus according to claim 2 or 3, **characterised in that** the magnet (32) is held in the plug (14) in an axially movable manner.

5. Apparatus according to claim 4, **characterised in that** the magnet (32) is resiliently biased into a rest position, which is opposed to the activating position, and can be pressed back into the activating position by cams (38) and releasing devices (40) which are constructed on a magnet carrier (30) and on the cap (16).

6. Apparatus according to claim 5, **characterised in that** the cams (38) and releasing devices (40) allow the magnet carrier (30) to spring back into the rest position once the limit torque has been reached or exceeded, and **in that** the location of the magnet (32) in the rest position and the strength thereof are adapted to the position of the magnetic switch (42) in such a manner that the magnetic switch (42), once it has been closed, also remains in the closed state if the magnet is in the rest position.

## Revendications

1. Dispositif pour contrôler la position de fermeture d'un couvercle de réservoir (10) comportant un aimant (32) disposé sur ou dans le couvercle de réservoir, et un interrupteur magnétique (42) disposé sur la tubulure de réservoir (12), **caractérisé en ce que** le couvercle de réservoir (10) comporte un limiteur de couple de rotation (36) et l'aimant (32) est accouplé au limiteur de couple de rotation (36) de manière qu'il ne parvienne dans une position déclenchant l'interrupteur magnétique (42) que lorsqu'est atteint un couple de rotation limite.

2. Dispositif selon la revendication 1, **caractérisé en ce que** le couvercle de réservoir (10) comporte un bouchon (14) fermant la tubulure de réservoir (10) et un capuchon (16) tournant qui est accouplé par le limiteur de couple de rotation (36) au bouchon (14) et qui peut tourner par rapport au bouchon, en cas de dépassement du couple de rotation limite, et **en ce que** l'aimant est déplaçable dans la position de déclenchement par la rotation du capuchon (16) par rapport au bouchon (14).

3. Dispositif selon la revendication 2, **caractérisé en ce que** le bouchon (14) est un bouchon à vis.

4. Dispositif selon la revendication 2 ou 3, **caractérisé en ce que** l'aimant (32) est maintenu déplaçable axialement dans le bouchon (14).

5. Dispositif selon la revendication 4, **caractérisé en ce que** l'aimant (32) est précontraint élastiquement dans une position de repos opposée à la position de déclenchement, et peut être repoussé dans la position de déclenchement par des cames (38) et des dispositifs de débrayage (40) formés sur un porte-aimant (30) ainsi que sur le capuchon (16).

6. Dispositif selon la revendication 5, **caractérisé en ce que** les cames (38) et dispositifs de débrayage (40) autorisent, lorsqu'est atteint ou dépassé le couple de rotation limite, un replacement élastique du porte-aimant (30) dans la position de repos, et **en ce que** la position de l'aimant (32) en position de repos et sa force sont adaptées à la position de l'interrupteur magnétique (42), de manière qu'après avoir été fermé une fois, l'interrupteur magnétique (42) reste en position fermée même lorsque l'aimant est en position de repos.
